Europäisches Patentamt

European Patent Office

Office européen des brevets

(19)

(11) Veröffentlichungsnummer: **0 039 957**
**B1**

(12)    # EUROPÄISCHE PATENTSCHRIFT

(45) Veröffentlichungstag der Patentschrift:
02.10.85

(21) Anmeldenummer: 81103715.9

(22) Anmeldetag: 14.05.81

(51) Int. Cl.⁴: **A 23 P  1/00,** A 23 L  1/18,
A 23 J  3/00

(54) Extrudierverfahren.

(30) Priorität: 14.05.80  CH 3772/80
20.06.80  DE 3023124

(43) Veröffentlichungstag der Anmeldung:
18.11.81 Patentblatt 81/46

(45) Bekanntmachung des Hinweises auf die Patenterteilung:
02.10.85 Patentblatt 85/40

(84) Benannte Vertragsstaaten:
CH DE FR GB IT LI NL SE

(56) Entgegenhaltungen:
DE - A - 1 517 038
DE - A - 2 532 309
DE - A - 2 744 583
FR - A - 2 432 842
GB - A - 2 053 788
US - A - 3 239 882
US - A - 4 125 635

JAPAN PLASTICS AGE, Band 13, Nr. 5/6, Mai-Juni 1975,
Seiten 29-46, KENKICHI MURAKAMI: "Mixing and
kneading with screw extrusion and DIS screw"

(73) Patentinhaber: Gebrüder Bühler AG, CH-9240 Uzwil (CH)

(72) Erfinder: Solenthaler, Karl, Wette, CH-9053 Teufen (CH)

(74) Vertreter: Dipl.-Phys.Dr. Manitz Dipl.-Ing. Finsterwald
Dipl.-Ing. Grämkow Dipl.-Chem.Dr. Heyn
Dipl.-Phys.Rotermund, B.Sc. Morgan
Robert-Koch-Strasse 1, D-8000 München 22 (DE)

## Beschreibung

Die Erfindung betrifft ein Extrudierverfahren zur Herstellung eines Produktes aus der Gruppe der expandierten Stärkeprodukte oder der strukturierten Proteinprodukte, wobei in einem einen Guteinlauf, Druckaufbau- und Druckabfallzonen sowie eine Auspreßdüse aufweisenden Einschneckenextruder auf ein zugeführtes Gut mit Druck, Reibung und eventuell Wärme eingewirkt wird.

Sie kann zur Verarbeitung von Stärketrägern aller Art, wie z. B. von Mais, Gerste, Tapioka, Milo, Reisbruch, Kartoffeln, Kartoffelstärke oder von Mischungen derselben verwendet werden. Sie ist ebenfalls für protein- und allenfalls ölhaltige Stoffe, wie Extraktionsschrot, vollfettige Erdnüsse, Sonnenblumen, Weizenkleber und Hülsenfrüchte, verwendbar.

Diese Produkte sind besonders problematisch, insbesondere, wenn sie relativ trocken verarbeitet werden, weil ihre Verflüssigung nicht an einem eindeutigen Punkt stattfindet, wie dies bei Kunststoffen üblich ist, sondern in einem relativ breiten Bereich.

Ein solches Verfahren ist aus der DE-B-1 217 190 bekannt. Bei ihm ist von Vorteil, daß Gut mit handelsüblichem Feuchtigkeitsgehalt behandelt werden kann. Damit entfällt eine spätere Trocknung, oder sie kann auf jeden Fall mit einem viel geringeren Energieverbrauch erfolgen. Durch eine Kompresionsschnecke wird das Gut einem ansteigenden Druck unterworfen, wobei im Verlauf der Drucksteigerung Zonen abfallenden Druckes eingeschaltet werden können.

Die Zonen abfallenden Druckes erlauben eine gewisse Homogenisierung. Vor der Auspreßdüse herrscht jedoch ein Druckmaximum, wodurch Instabilitäten des Druckaufbaus, insbesondere Pulsationen, entstehen: Die Koppelung vom Druckaufbau im Extruder und von der Düsencharakteristik ist stark von den Reibungsverhältnissen in den verschiedenen Aggregatzuständen abhängig, was zu dauernden Wanderungen bzw. Pendeln der Verflüssigungszone entlang des Extruders und zu Dimensionsvariationen des extrudierten Stranges führt. Für ein gegebenes Produkt gibt es keine Linearität zwischen Durchsatzmenge und Drehzahl, sondern eine Kurve, die bei größerer Drehzahl immer tiefer unter der gewünschten Geraden liegt. Die Qualität des Produktes ist nicht immer gewährleistet, weil das Verweilzeitspektrum beträchtliche Unterschiede für verschiedene Partikel des Produktes aufzeigt: Die großen Verweilzeitunterschiede zwischen schnellen und langsamen Partikeln beruhen darauf, daß im flüssigen Teil neben der erwünschten Schleppströmung eine unerwünschte Rückströmung zwischen den Schneckengängen und dem Gehäuse stattfindet, was für die Homogenität nachteilig ist.

Für die Extrusion von Kunststoffen ist das Konzept einer förderwirksamen Einzugszone entwickelt worden und durch das Textbuch W. Dalhoff »Systematische Extruderkonstruktion«, Otto-Krausskopf-Verlag GmbH, Mainz, 1974, bekannt.

Dank einer förderwirksamen Einzugszone werden Druckpulsationen beim Gutaustritt aus dem Extruder weitgehend vermieden, das Verweilzeitspektrum und der Durchsatz des behandelten Gutes werden enger bzw. höher als bei konventioneller Extrusion, und eine Erhöhung der Produktqualität wird erreicht.

Das Verfahren bei der Kunststoffextrusion ist anders als das bei der Nahrungs- und Genußmittelextrusion, aus dem Grunde, daß bei letzterer eine Zerkleinerung (vorhandener Rohfaser) unbedingt erfolgen muß, um eine Homogenisierung des Gutes zu erlauben.

Bei der Kunststoffextrusion dagegen wird im plastischen oder geschmolzenen Zustand die Homogenisierung, ohne die Notwendigkeit einer vorherigen Zerkleinerung, erlaubt. Bei der Extrusion expandierter Stärkeprodukte sowie verschiedener strukturierter Proteinprodukte kommt außerdem eine Produktexpansion in Betracht, welche keine Parallele innerhalb der Kunststoffextrusion hat.

Das erfindungsgemäße Verfahren hat die Aufgabe, bei guter Wirtschaftlichkeit eine Verbesserung der Qualität und der Konstanz des behandelten Produktes, insbesondere Stärketräger, zu erreichen sowie eine stabile Strömung durch Vermeidung von Druckpulsationen, ein enges Verweilzeitspektrum und einen hohen Durchsatz bei relativ kleinem Anlagenaufwand zu erreichen.

Ausgehend vom eingangs genannten Verfahren wird die Aufgabe dadurch gelöst, daß in einer ersten, unmittelbar nach dem Guteinlauf angeordneten, die einzelne Druckaufbauzone darstellenden Zone des Extruders der Druck im Gut auf seinen maximalen Wert im Bereich von 100 bis 500 bar rasch aufgebaut wird, wobei dieser Maximalwert am Anfang einer der Druckaufbauzone direkt anschließenden Zwischenzone des Extruders, wo das Gut noch fest oder nur zu einem kleinen Teil verflüssigt ist, erreicht wird, daß das Gut bei allmählich abfallendem Druck in dieser Zwischenzone verflüssigt wird, und daß in einer direkt an die Zwischen- bzw. Verflüssigungszone anschließenden Zone des Extruders der Druck im Gut zur Homogenisierung desselben bis auf einen vor der direkt an diese Zone anschließenden Auspreßdüse herrschenden Druck im Bereich von 10 bis 100 bar allmählich verbraucht wird.

Vorzugsweise beträgt der maximale Druck 200 bis 300 bar und der Druck vor der Auspreßdüse 40 bis 60 bar.

Weil ein Bereich abnehmenden Druckes vor der Auspreßdüse vorgesehen ist, werden Druckpulsationen vermieden. Der rasche Druckaufbau erfolgt in der ersten Zone, wo das Gut noch aus festen Partikeln besteht, so daß hier keine Rückströmung über die Schneckengänge entsteht. In der Zone, wo das Gut verflüssigt ist, gibt es eine Propfenströmung, weil der Druck in Richtung der Auspreßdüse abnimmt und somit keine Rückströmung entsteht. Weil der Druckaufbau auf dem kürzesten Weg erfolgt, bleibt der Extruder kurz. Ein großer Teil (bis 70%) der für die Produktumwandlung (Gelatinisierung oder Strukturierung) erforderlichen Energie wird kurz nach dem Guteinlauf in das Gut eingebracht, so daß ein relativ kleiner Extruderdurchmesser genügt. Weil der Druck in der Einzugszone die Förderung bestimmt, wird die Charakteristik Drehzahl — Durchsatz linear.

Der Druckverlauf erlaubt es, nach der Druckaufbauzone dem Gut Flüssigkeit und/oder Fett zuzugeben, wobei eine viel bessere Homogenisierung als beim bisherigen Zugeben in die Schnecke oder gar in die Auspreßdüse erreicht wird. Dabei können viel größere Mengen zugegeben werden, weil nach der Druckaufbauzone keine große Förderwirkung des Rotors notwendig ist, so daß eine Herabsetzung des Reibungskoeffizienten des Gutes keine nachteilige Wirkung auf die Förderung hat.

Wenn nach der Druckaufbauzone das Gut im Extruder in einem schmalen Ringraum zwischen Rotor und Gehäuse behandelt, in zylindrischer Form extrudiert und nach dem Austreten aus diesem zylindrischen Raum zu Flocken geschnitten bzw. gebrochen wird, kann ein viel stärkerer Stärkeaufschluß als z. B. bei gewalzten Flocken erreicht werden. Beim neuen Extrudierverfahren entstehen neuartige Flocken, deren Stärkeaufschluß 80 bis 95% und mehr, vorzugsweise 90%, der insgesamt vorhandenen Stärke beträgt, und die somit eine beträchtlich verbesserte Verdaulichkeit haben.

Zur Durchführung des erfindungsgemäßen Verfahrens wird eine Extrudieranlage mit einem Extruder verwendet, der einen in einem Gehäuse drehenden, vorwiegend als Schnecke gestalteten Rotor aufweist. Der Rotor ist vom Guteinlauf bis zur Auspreßdüse in mindestens zwei Zonen unterteilt, und zwar in eine Druckaufbauzone zum raschen Druckaufbau und in eine Druckverbrauchzone zum Mischen und Homogenisieren des Gutes vor der Auspreßdüse. Zum Druckaufbau ist ein Schneckenteil mit abnehmender Gangtiefe oder mit abnehmender Gangsteigung oder eine Kombination davon vorgesehen.

Mit Vorteil ist zwischen der Druckaufbauzone und der Druckverbrauchzone eine Zwischenzone vorgesehen, in welcher im Sinne der Druckaufrechterhaltung wirkende, vorzugsweise am Rotor angebrachte Mittel vorhanden sind. Die Zwischenzone erlaubt es, verschiedene Produkte zu verarbeiten, deren Verflüssigungszonen nicht am gleichen Ort liegen. Für diese Zwischenzone ist der Rotor vorteilhaft als Schnecke mit gleichmäßiger Gangtiefe und Gangsteigung ausgebildet.

Vorteilhaft beträgt das Verhältnis l/d der Länge des Rotors zum inneren Durchmesser des Gehäuses in der Druckaufbauzone von 2 bis 4, vorzugsweise 3.

Somit ist dieser Teil relativ kurz. Auch für die Druckverbrauchzone und die Zwischenzone kann das Verhältnis l/d 2 bis 4, vorzugsweise 3, betragen. Beim Einhalten dieser Dimensionierungsregeln liegt das Verhältnis l/d für den ganzen Rotor vom Ende des Guteinlaufes bis zur Auspreßdüse zwischen 4 (ohne Zwischenzone) und 12. An der Druckverbrauchzone können Zuführmittel für Flüssigkeit und/oder Fett angeordnet sein.

Für die Druckverbrauchzone können verschiedene vorteilhafte Ausbildungen vorgesehen werden, die je nach hauptsächlicher Anwendung der Extrudieranlage vorgesehen werden und anhand der Zeichnung beschrieben werden.

Eine vorteilhafte Anwendung der Extrudieranlage für expandierte Futtermittel ergibt sich, wenn die Öffnungen der Auspreßdüse durch einen beweglichen Teil begrenzt sind, der einerseits einer Vorspannung, andererseits dem Druck des Gutes ausgesetzt ist, derart, daß der Querschnitt der Öffnungen veränderbar ist und den Druck reguliert. Eine solche Auspreßdüse ist in der DE-A-2 943 820 beschrieben worden.

Für die Herstellung von Flocken kann in der Druckverbrauchzone der Rotor zylindrisch sein und einen schmalen zylindrischen Spalt mit dem Gehäuse bilden. Die Konstruktion ist besonders einfach, wenn das Ende des Gehäuses und das Ende des Rotors eine ringförmige Auspreßdüse bilden, und wenn eine Brech- bzw. Schneidvorrichtung, vorzugsweise ein nach der Auspreßdüse am Rotor befestigtes Messer, vorhanden ist.

Die Erfindung wird im folgenden beispielsweise anhand der Zeichnung beschrieben; in dieser zeigt

Fig. 1 einen Längsschnitt durch eine erste Variante eines für das erfindungsgemäße Verfahren geeigneten Extruders,

Fig. 2 eine Draufsicht des Endes des Extruders,

Fig. 3 einen Schnitt entlang der Linie III-III der Fig. 1,

Fig. 4 einen Schnitt entlang der Linie IV-IV der Fig. 1,

Fig. 5 ein Diagramm des Verlaufs des Drucks längs des Extruders der Fig. 1 im Vergleich mit dem Druckverlauf in einem bekannten Extruder,

Fig. 6 eine Variante der Druckverbrauchzone des Extruders,

Fig. 7 einen Schnitt entlang der Linie VII-VII der Fig. 6,

Fig. 8, 9, 10, 11 vier weitere Varianten der Druckverbrauchzone und

Fig. 12 einen Längsschnitt durch eine Variante des Extruders, die für die Herstellung von Flocken verwendet wird.

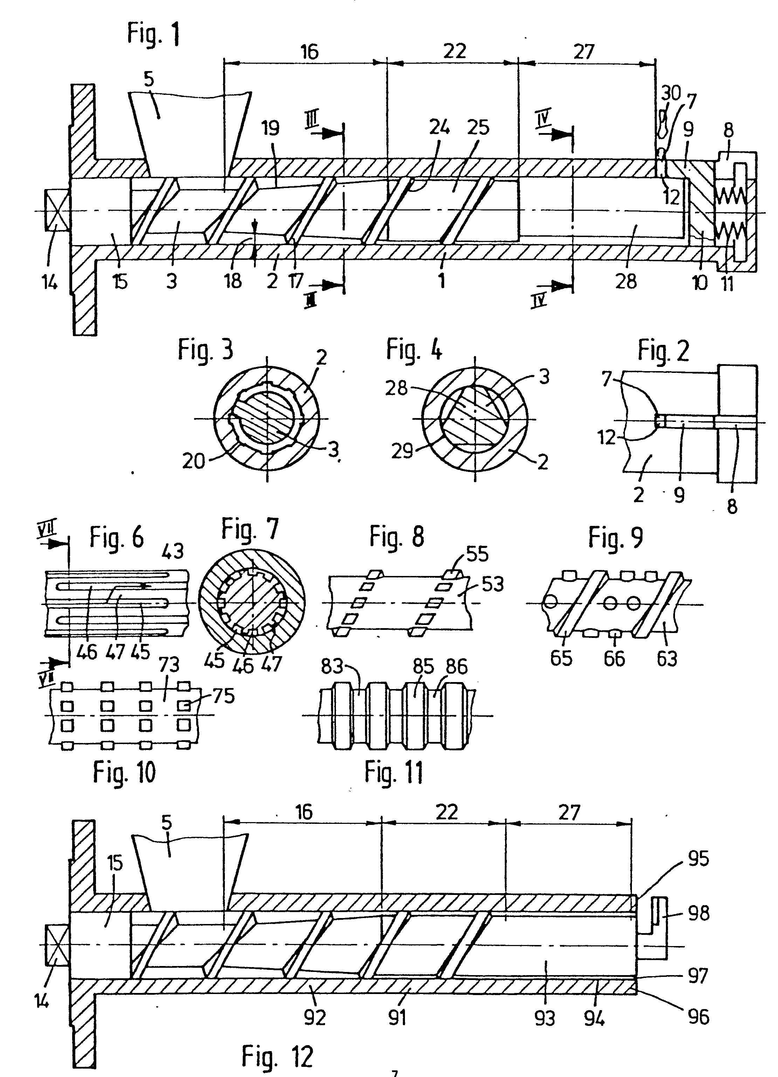

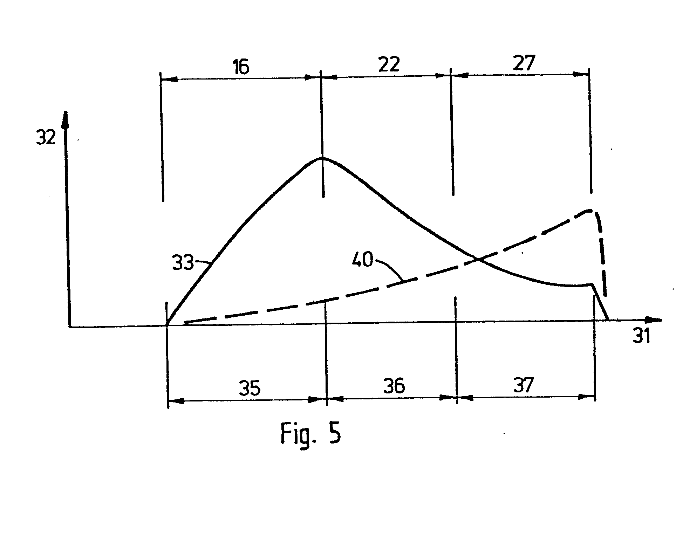

Der Extruder 1 der Fig. 1 bis 4 weist ein zylindrisches Gehäuse 2 auf, in welchem ein Rotor 3 umläuft, der das Gut vom Guteinlauf 5 bis zur Auspreßdüse 7 fördert. Zur Bildung dieser Düse 7 sind im Gehäuse 2 Schlitze 8 angebracht, in welchen Rippen 9 axial beweglich sind. Die Rippen 9 sind an einem Kolben 10 befestigt, der einerseits unter dem Einfluß der Vorspannung von Federn 11 und andererseits unter dem Einfluß des Druckes des Gutes bei der Düse steht. Düsenöffnungen 12 sind durch den Abstand zwischen den Rippen 9 und dem Ende der Schlitze 8 gebildet.

Der Rotor 3 wird durch nicht dargestellte Mittel am Antriebsvierkant 14 angetrieben. Er ist mit einem Dichtungszylinder 15 versehen. Nach dem Guteinlauf 5 weist der Rotor 3 eine Druckaufbauzone 16 auf, die in der dargestellten Ausführungsform eine Schnecke mit Gewindegängen 17 ist, bei der die Gangtiefe 18 wegen der Vergrößerung des Durchmessers des Schneckenkerns 19 in Förderrichtung abnimmt. In dieser Druckaufbauzone 16 sind am Gehäuse 2 Längsnuten 20 zur Erhöhung der Reibung angebracht. Es wäre möglich, die Kompression in der Druckaufbauzone 16 durch eine abnehmende Schneckensteigung zu bewirken oder zu unterstützen.

Der Druckaufbauzone 16 schließt sich eine Zwischenzone 22 an, in welcher der Rotor 3 als Schnecke mit Schneckengängen 24 ausgebildet ist. Der Durchmesser des Schneckenkerns 25 und die Schneckensteigung bleiben aber in der Zwischenzone 22 konstant, so daß dort keine weitere Kompression des Gutes stattfindet. Die Schneckengänge 24 unterstützen jedoch weiter die Förderung und wirken im Sinne der Druckaufrechterhaltung.

Vom Ende der Zwischenzone 22 bis zu den Düsenöffnungen 12 erstreckt sich eine Druckverbrauchzone 27, in welcher der Rotor 3 in einen Fortsatz 28 mit dreieckförmigem Querschnitt ausgebildet ist. Er ist an den Kanten abgeschnitten und dort entsprechend dem Querschnitt des Gehäuses durch Kreisbogen 29 begrenzt. Der Fortsatz 28 erstreckt sich über die Düsenöffnungen 12 hinweg und dient bei diesen Düsenöffnungen 12 als Innenmesser zum Abschneiden von Einzelstücken 30 des extrudierten Produktes.

Der Druck des Gutes wirkt auf den Kolben 10. Steigt dieser Druck, dann wird der Kolben 10 gegen die Vorspannkraft der Federn 11 nach rechts verschoben, und der Querschnitt der Düsenöffnungen 12 wird größer. Hierdurch nimmt der Druck des Gutes vor den Düsenöffnungen 12 ab und wird somit durch die Auspreßdüse 7 reguliert.

Die Funktion des Extruders 1 kann mittels Fig. 5 verfolgt werden. Die Abszisse 31 gibt die axiale Lage im Extruder 1 an, und die Lage der Druckaufbauzone 16, der Zwischenzone 22 und der Druckverbrauchzone 27 ist gezeigt. Die Ordinate 32 gibt den Druck p an.

Die ausgezogene Druckkurve 33 zeigt den Druckverlauf im Extruder der Fig. 1, längs der Abszisse 31 sind die Lage des festen Bereiches 35, des Verflüssigungsbereiches 36 und des flüssigen Bereiches 37 eines so behandelten Gutes angegeben.

In der Druckaufbauzone 16 steigt der Druck des festen Gutes steil an. Er erreicht sein Maximum am Anfang der Zwischenzone 22, wo das Gut noch fest oder zumindest nur zu kleinem Teil verflüssigt ist. Aufgrund der fortschreitenden Verflüssigung nimmt der Reibungskoeffizient im Gut ab und somit auch der Druck. Am Ende der Zwischenzone 22, wo die Schneckengänge 24 dem Druckabfall entgegenwirken, wird das Gut in die Druckverbrauchzone 27 überführt, in welcher es durch den dreieckigen Fortsatz 28 des Rotors 3 gemischt und homogenisiert wird. Vor den Düsenöffnungen 12 erreicht der Druck ein Minimum, z. B. 50 bar, was noch zur Extrusion genügt. Durch die Schneidwirkung des Fortsatzes 28 wird das Gut vor den Düsenöffnungen 12 zerschnitten und entweicht portionsweise unter Bildung von Produktstücken 30, die in Fig. 1 im expandierten Zustand dargestellt sind.

Die gestrichelte Kurve 40 zeigt den Druckaufbau in einem konventionellen Extruder, der wie üblich bis zur Auspreßdüse stetig zunimmt. Weil der Druck hier am größten ist, pflanzen sich Schwankungen des Extrudiervorganges durch die Auspreßdüse in den ganzen Extruder fort.

Bei dem Extruder für das erfindungsgemäße Verfahren kann die Lage des Druckmaximums je nach Kompressionsverhalten der verarbeiteten Produkte und je nach Schneckenfüllgrad variieren. Dieser Schneckenfüllgrad kann z. B. durch Regelung der Speisung eingestellt werden. Es können trotzdem Produkte sehr verschiedener Beschaffenheit verarbeitet werden, weil die Zwischenzone 22 den größten Teil des Verflüssigungsbereiches 36 kontrolliert.

Mit dem Extruder 1 kann ein vorgeschalteter Dampf-Speiseapparat zusammengebaut werden. In diesem, ähnlich einem kontinuierlichen Mischer für körniges Gut gebauten Apparat kann das zu verarbeitende Gut mit Dampf konditioniert werden.

Die dargestellte Auspreßdüse 7 ist besonders vorteilhaft für die Herstellung stückiger, expandierter Produkte. Für andere Produkte können selbstverständlich andere Typen von Auspreßdüsen verwendet werden, z. B. solche mit einer oder mehreren axialen Öffnungen.

In der Druckverbrauchzone der Variante der Fig. 6, 7 weist der zylindrische Rotor 3 Sacknuten 45, 46 auf, deren Richtung alterniert. Die Höhe der Wandung 47 zwischen einer auf der Seite des Guteinlaufs 5 geöffneten Sacknut 45 und einer auf der Seite der Auspreßdüse 7 geöffneten Sacknut 46 ist leicht vermindert, um den Übergang des Gutes von der ersten zur zweiten Sacknut zu gestatten.

Bei der Druckverbrauchzone nach der Variante der Fig. 8 besteht der Rotor 53 aus einem zylindrischen Teil, der mit unterbrochenen Schneckengängen 55 bestückt ist.

Bei der Druckverbrauchzone nach der Variante der Fig. 9 ist der Rotor 63 schneckenförmig mit großer Schneckensteigung ausgebildet, wobei zwischen den Schneckengängen 65 runde Aufsätze 66 am Rotor 63 befestigt sind.

Bei der Druckverbrauchzone nach der Variante der Fig. 10 besteht der Rotor 73 aus einem zylindrischen Teil, der viereckige Aufsätze 75 trägt.

Bei der Druckverbrauchzone nach der Variante der Fig. 11 besteht der Rotor 83 aus Scheiben 85, 86, die abwechselnd einen größeren und einen kleineren Durchmesser aufweisen.

Bei der Druckverbrauchzone können das Gehäuse und der Rotor sich konisch erweiternd ausgebildet werden, was zu einer Vergrößerung der Scherkräfte führen würde. Der Öffnungswinkel kann 0 bis 90° betragen, vorzugsweise 60°.

Beim Extruder 91 nach der Variante der Fig. 12 ist in der Druckverbrauchzone 27 der Rotor 93 zylindrisch und bildet einen schmalen zylindrischen Spalt 94 mit dem Gehäuse 92. Das Ende 95 des Gehäuses 92 und das Ende 96 des Rotors 93 bilden eine ringförmige Auspreßdüse 97.

Nach dieser Auspreßdüse 97 dient ein am Rotor 93 befestigtes Messer 98 als Brech- bzw. Schneidvorrichtung für den expandierten Produktzylinder, den er zu Flocken zerkleinert. Mit diesem Extruder 91 können Flocken mit sehr hohem Stärkeaufschluß hergestellt werden.

Es werden noch einige Arbeitsbeispiele angegeben, bei denen ein Extruder mit einer Gehäusebohrung von 80 mm, einer Druckaufbauzone von 240 mm Länge, einer Zwischenzone von 240 mm Länge und einer Druckverbrauchzone von 240 mm Länge, insgesamt also 720 mm aktiver Länge, verwendet wurde.

### Beispiel 1

Ausgangsprodukt war ein ungedämpftes Vollkornmaismehl, das auf Körnerabmessungen kleiner als 5 mm gemahlen worden war. Die Schüttdichte betrug 0,5 kg pro dm³. Erhalten wurde ein expandiertes Produkt mit einer Schüttdichte von 0,1 kg pro dm³ und einem Stärkeaufschluß von 85%. Der Gleichförmigkeitsgrad des Durchsatzes war von einem früheren Variationskoeffizienten von 15% auf 3% verbessert. Das Pulsieren des Produktstromes wurde dank der Ausbildung mit Druckaufbauzone und Druckverbrauchzone verhindert. Der Durchsatz betrug 400 kg pro Stunde.

### Beispiel 2

Ausgangsprodukt war eine rohfaserreiche Ferkelspezialmischung, die auf eine Körnung kleiner als 4 mm gemahlen worden war und 40% Hafer, 40% Gerste, 15% Weizenkleie und 5% diverse Zusatzstoffe, wie Vitamine und Mineralstoffe, enthielt. Wie im Beispiel 1 war dieses Produkt ungedämpft. Das Endprodukt hatte einen Stärkeaufschluß von über 75%. Der Durchsatz war 450 kg pro Stunde.

### Beispiel 3

Ausgangsprodukt war eine Netzfuttermischung mit 45% Fischmehl, 10% Kartoffelpulpe sowie 20% verschiedenen Zusatzstoffen. Dank der Wirksamkeit der Förderung in der Druckaufbauzone war es möglich, die restlichen 25% der Mischung als Fettzugabe direkt in die Druckverbrauchzone hineinzugeben. Somit ist es möglich, ein solches Produkt mit sehr hohem Fettgehalt zu extrudieren. Der Durchsatz bei dieser ebenfalls ungedämpften Mischung betrug 340 kg pro Stunde.

Bei der Extrudieranlage für das erfindungsgemäße Verfahren ist somit der Rotor 3 vom Guteinlauf 5 bis zur Auspreßdüse 7 des Extruders 1 in eine Druckaufbauzone 16, eine Zwischenzone 22 und eine Druckverbrauchzone 27 unterteilt. Die Druckverbrauchzone 27 dient zum Mischen und Homogenisieren des Gutes vor dem Extrudieren durch die Auspreßdüse 7.

Es werden Produkte aus der Gruppe der expandierten Stärkeprodukte oder der strukturierten Proteinprodukte behandelt. Der maximale Druck wird im noch nicht verflüssigten Gut oder kurz nach der Verflüssigung erreicht.

Weil in der Druckaufbauzone 16 das Gut noch im festen Zustand vorliegt, und der abfallende Druck in der Druckverbrauchzone 27 abnimmt, gibt es keine ungewünschte Rückströmung im Extruder 1. Die Zwischenzone 22 fängt Unterschiede in der Lage des Verflüssigungsbereiches verschiedener Produkte auf.

### Patentansprüche

1. Extrudierverfahren zur Herstellung eines Produktes aus der Gruppe der expandierten Stärkeprodukte oder der strukturierten Proteinprodukte, wobei in einem einen Guteinlauf (5), Druckaufbau- und Druckabfallzonen (16, 22, 27) sowie eine Auspreßdüse (7, 97) aufweisenden Einschneckenextruder (1) auf ein zugeführtes Gut mit Druck, Reibung und eventuell Wärme eingewirkt wird, dadurch gekennzeichnet, daß in einer ersten, unmittelbar nach dem Guteinlauf (5) angeordneten, die einzelne Druckaufbauzone darstellenden Zone (16) des Extruders (1) der Druck im Gut auf seinen maximalen Wert im Bereich von 100 bis 500 bar rasch aufgebaut wird, wobei dieser Maximalwert am Anfang einer der Druckaufbauzone (16) direkt anschließenden Zwischenzone (22) des Extruders (1), wo das Gut noch fest oder nur zu einem kleinen Teil verflüssigt ist, erreicht wird, daß das Gut bei allmählich abfallendem Druck in dieser Zwischenzone (22) verflüssigt wird, und daß in einer direkt an die Zwischen- bzw. Verflüssigungszone (22) anschließenden Zone (27) des Extruders (17) der Druck im Gut zur Homogenisierung desselben bis auf einen vor der direkt an diese Zone (27) anschließenden Auspreßdüse (7, 97) herrschenden Druck im Bereich von 10 bis 100 bar allmählich verbraucht wird.

2. Extrudierverfahren nach Anspruch 1, dadurch gekennzeichnet, daß der maximale Druck 200 bis 300 bar beträgt.

3. Extrudierverfahren nach einem der Ansprüche 1 oder 2, dadurch gekennzeichnet, daß der Druck vor der Auspreßdüse 40 bis 60 bar beträgt.

4. Extrudierverfahren nach einem der Ansprüche 1 bis 3, dadurch gekennzeichnet, daß nach der Druckaufbauzone (16) Flüssigkeit und/oder Fett dem Gut zugegeben wird.

5. Extrudierverfahren nach einem der Ansprüche 1 bis 4, dadurch gekennzeichnet, daß in der Homogenisierzone (27) das Gut in einem schmalen Ringraum (94) zwischen Rotor (93) und Gehäuse (96) behandelt, in zylindrischer Form extrudiert und nach dem Austreten aus diesem zylindrischen Raum zu Flocken geschnitten bzw. gebrochen wird.

6. Extrudierverfahren nach Anspruch 5, dadurch gekennzeichnet, daß der Stärkeaufschluß der Flocken 80 bis 95% und mehr, vorzugsweise 90%, der insgesamt vorhandenen Stärke beträgt.

## Claims

1. An extrusion process for the manufacture of a product from the group of the expanded starch products or the structured protein products, wherein the material supplied is acted on in a single screw extruder (1) having a material inlet (5), pressure build-up and reduction zones (16, 22, 27) and also a discharge nozzle (7, 97) by pressure, friction, and if necessary heat, characterised in that the pressure in the material (5) is rapidly build-up to its maximum value in a range from 100 to 500 bar in a first zone (16) of the extruder (1) arranged directly after the material inlet (5) and representing the single pressure build-up zone, with this maximum value being achieved at the start of an intermediate zone (22) of the extruder (1) where the material is still solid or only liquefied to a small degree; with the intermediate zone directly following the pressure build-up zone (16); in that the material is liquefied in this intermediate zone (22) with gradually falling pressure; and in that, in a zone (27) of the extruder (1) which directly follows the intermediate or liquefaction zone (22), the pressure in the material is gradually consumed for homogenisation of the same down to a pressure in the range from 10 to 100 bar prevailing in front of the extrusion nozzle (7, 97) which directly follows this zone (27).

2. Extrusion process in accordance with claim 1, characterised the maximum pressure amounts to 200 to 300 bar.

3. Extrusion process in accordance with claim 1 or claim 2, characterised in that the pressure in front of the discharge nozzle amounts to 40 to 60 bar.

4. An extrusion process in accordance with one of the claims 1 to 3, characterised in that liquid and/or fat is added to the material after the pressure build-up zone (16).

5. An extrusion process in accordance with one of the claims 1 to 4, characterised in that the material is treated in the homogenizing zone (27) in a narrow annular chamber (94) between the rotor (93) and the housing (96), is extruded in cylindrical form and is cut or broken into flakes after emergence from this cylindrical chamber.

6. An extrusion process in accordance with claim 5, characterised in that the digestible starch content of the flakes amounts to 80 to 95% and more, and preferably to 90%, of the total starch present.

## Revendications

1. Procédé d'extrusion pour la fabrication d'un produit appartenant au groupe des produits expansés à base d'amidon ou des produits structurés à base de protéines, procédé au cours duquel on agit sur la matière de départ par pression, frottement et éventuellement chaleur, ceci dans une extrudeuse à vis comportant une entrée (5) pour la matière, des zones (16, 22, 27) d'élévation et d'abaissement de pression, ainsi qu'une filière d'extrusion (7, 97), caractérisé en ce que dans uns première zone suivant immédiatement l'entrée (5) pour la matière de départ, c'est à dire la zone (16) particulière d'élévation de pression de l'extrudeuse (1), la pression dans la matière s'élève rapidement à sa valeur maximum dans la bande de 100 à 500 bar, cette valeur maximum étant atteinte au début d'une zone (22) intermédiaire de l'extrudeuse (1) suivant immédiatement la zone (16) d'élévation de pression, la matière au début de cette zone (22) intermédiaire étant encore sous forme solide ou en petite partie liquide, en ce que la matière est liquéfiée dans cette zone (22) intermédiaire sous une pression baissant progressivement, et en ce que dans une zone (27) de l'extrudeuse suivant directement la zone (22) intermédiaire ou de liquéfaction la pression dans la matière est consumée graduellement pour l'homogénisation de celle-ci jusqu'à la pression située dans la bande de 10 à 100 bar qui règne devant la filière d'extrusion (7, 97) suivant directement cette zone (27).

2. Procédé d'extrusion selon la revendication 1, caractérisé en ce que la pression maximum se situe dans la bande de 200 à 300 bar.

3. Procédé d'extrusion selon l'une des revendications 1 ou 2, caractérisé en ce que la pression devant la filière d'extrusion se situe dans la bande de 40 à 60 bar.

4. Procédé d'extrusion selon l'une des revendications 1 à 3, caractérisé en ce que du liquide et/ou de la graisse est ajouté à la matière après la zone (16) d'élévation de pression.

5. Procédé d'extrusion selon l'une des revendications 1 à 4, caractérisé en ce que dans la zone (27) d'homogénisation la matière est traitée dans un espace annulaire (94) étroit situé entre le rotor (93) et l'enveloppe (96), extrudée sous forme cylindrique et coupée, respectivement brisée, en flocons à la sortie de cet espace annulaire (94).

6. Procédé d'extrusion selon la revendication, caractérisé en ce que le degré de gélatinisation des flocons atteint 80 à 95% et plus, de préférence 90%, du total de l'amidon présent.

Fig. 1

Fig. 3

Fig. 4

Fig. 2

Fig. 6

Fig. 7

Fig. 8

Fig. 9

Fig. 10

Fig. 11

Fig. 12

Fig. 5